# EUROPEAN PATENT SPECIFICATION

(11) **EP 2 213 526 B1**
(45) Date of publication and mention of the grant of the patent: **07.03.2012**
(21) Application number: 09151126.1
(22) Date of filing: 22.01.2009
(51) Int. Cl.: B60R 21/239, B60R 21/233

(54) **A safety device**
Sicherheitsvorrichtung
Dispositif de sécurité

(43) Date of publication of application: 04.08.2010
(73) Proprietor: Autoliv Development AB, 447 83 Vargarda (SE)
(72) Inventor: Sager, Claudia, 85247 Schwabhausen (DE)
(74) Representative: Beattie, Alex Thomas Stewart

(56) References cited:
- EP-A- 0 922 616
- EP-A- 1 361 120
- DE-A1- 19 847 854
- GB-A- 2 400 355
- JP-A- 4 244 453
- US-A- 4 169 613
- US-A- 5 586 782
- ANONYMOUS: "Pressure chambered SIR" RESEARCH DISCLOSURE, MASON PUBLICATIONS, HAMPSHIRE, GB, vol. 350, no. 86, 1 June 1993 (1993-06-01), XP007119152 ISSN: 0374-4353

## Description

### Description of Invention

THE PRESENT INVENTION relates to a safety device, and more particularly relates to a safety device in the form of an air-bag for use in a vehicle.

An air-bag is inflated in a vehicle in the event that the vehicle is involved in a crash situation to provide a cushion against which an occupant of the vehicle can move. The air-bag is designed to decelerate the occupant slowly to minimise the possibility of the occupant striking part of the vehicle and becoming injured. The head of an occupant is more fragile than the torso of the occupant. Therefore it is desirable for an air-bag to decelerate the head of an occupant more gradually than the torso of the occupant to minimise injury to the head of the occupant.

It has been proposed previously to provide an air-bag arrangement which comprises a first air-bag and a second air-bag which are connected to one another. A one way valve is installed between the first and second air-bags so that gas can flow from the first air-bag into the second air-bag but not from the second air-bag back in to the first air-bag. The valve controls the amount of gas which flows from the first air-bag to the second air-bag and thus controls the pressure of gas in the second air-bag. The valve ensures that the second air-bag is inflated to a lower pressure than the first air-bag so that the second air-bag provides a more gentle cushioning effect than the first air-bag.

The air-bag is positioned within the vehicle so that, when the air-bag is inflated, the second air-bag is positioned closest to the head of the occupant.

During a crash situation, the head of the occupant moves against the second air-bag and the second air-bag decelerates the head of the occupant gently. Then, once the head of the occupant has moved through the second air-bag, the torso of the occupant moves against the first air-bag so that the first air-bag decelerates the torso of the occupant. The different gas pressures in the first and second air-bags provide different cushioning levels to decelerate different parts of occupant at different rates.

The valve of a conventional air-bag such as the air-bag described above is constructed from a silicone or rubber layer which is stitched between the first and second air-bags. Valves of this type are effective at controlling the pressure levels in the first and second air-bags. However, valves of this type are expensive to produce and difficult to attach to the air-bag. Conventional air-bags which incorporate a silicone or rubber one way valve are thus expensive and difficult to manufacture.

US Patent Number 5586782, which comprises the features mentioned in the preamble of claim 1, discloses an air-bag having two chambers, a vent hole to enable gas to pass from one chamber to another chamber and a vent cover which is configured to cover the vent hold.

The present invention seeks to provide an improved safety device and a method of manufacturing such a safety device.

According to one aspect of the present invention, there is provided a safety device for use in a vehicle, the safety device comprising a first air-bag and a second air-bag which are connected to one another, the second air-bag being provided with a slit and the first air-bag being provided with an opening, the safety device further comprising a blocking element which covers at least part of the slit and overlies and seals against a region of a surface of the second air-bag to substantially prevent gas flowing from the second air-bag through the slit and the opening into the first air-bag, the blocking element being configured to deform in response to a pressure of gas within the first air-bag to uncover at least part of the slit and break the seal between the blocking element and the second air-bag to allow gas to flow from the first air-bag through the slit and the opening into the second air-bag, characterised in that the blocking element is formed by a region of the first air-bag which is cut partially from the first air-bag.

In one embodiment, the second air-bag is provided with a further slit and the safety device comprises a further blocking element which is formed by a region of the first air-bag which is cut partially from the first air-bag, wherein the further blocking element covers at least part of the further slit and overlies and seals against a region of a surface of the second air-bag to substantially prevent gas flowing from the second air-bag through the further slit and the opening into the first air-bag, the further blocking element being configured to deform in response to a pressure of gas within the first air-bag to uncover at least part of the further slit and break the seal between the further slit and the second air-bag to allow gas to flow from the first air-bag through the further slit and the opening into the second air-bag.

Preferably, the slit is substantially parallel to and spaced apart from the further slit.

Advantageously, the opening is defined by a region of the first air-bag which was occupied by one of the or each blocking elements before the blocking element was cut partially from the first air-bag.

Preferably, the second air-bag is provided with a vent arrangement to vent gas from within the second air-bag to the exterior of the safety device.

Conveniently, the vent arrangement comprises a vent aperture in the second air-bag and a vent tube, the vent tube being connected to the second air-bag to be in fluid communication with the vent aperture so that the vent tube directs gas flowing out from the vent aperture to a location which is remote from the vent aperture.

According to another aspect of the present invention there is provided a method of manufacturing a safety device for use in a vehicle comprising cutting partially a region of a first air-bag to form a blocking element, the region of the first air-bag which was occupied by the blocking element forming an opening in the first air-bag forming a slit in a second air-bag connecting the first air-bag to the second air-bag and positioning the blocking element so that the blocking element covers at least part of the slit and overlies and seals against a region of a surface of the second air-bag to substantially prevent gas flowing from the second air-bag through the slit and the opening into the first air-bag, the blocking element being configured to deform in response to a pressure of gas within the first air-bag to uncover at least part of the slit and break the seal between the blocking element and the second air-bag to allow gas to flow from the first air-bag through the slit and the opening into the second air-bag.

Preferably, the method further comprises forming a further slit in the second air-bag.

Conveniently, the method further comprises cutting partially a region of the first air-bag to form a further blocking element and positioning the further blocking element so that the further blocking element covers at least part of the further slit and overlies and seals against a region of the surface of the second air-bag to substantially prevent gas flowing from the second air-bag through the further slit and the opening into the first air-bag, the further blocking element being configured to deform in response to a pressure of gas within the first air-bag to uncover at least part of the further slit and break the seal between the further blocking element and the second air-bag to allow gas to flow from the first air-bag through the further slit and the opening into the second air-bag.

Preferably, the method further comprises forming a vent aperture in the second air-bag and attaching a vent tube to the second air-bag to be in fluid communication with the vent aperture so that the vent tube directs gas flowing out from the vent aperture to a location which is remote from the vent aperture.

In order that the invention may be more readily understood, and so that further features thereof may be appreciated, embodiments of the invention will now be described, by way of example, with reference to the accompanying drawings in which:
Figure 1 is a diagrammatic sectional view through a safety device in accordance with one embodiment of the invention which incorporates a first air-bag and a second air-bag,
Figure 2 is a diagrammatic perspective view of two regions of the first and second air-bags of safety device of figure 1 which form a valve arrangement, during an initial stage in the manufacture of the safety device,
Figure 3 is a diagrammatic sectional view through the valve arrangement of the safety device of figure 1 in a fully assembled state,
Figure 4 is a diagrammatic plan view of the valve arrangement of the safety device of figure 1,
Figure 5 is a view corresponding to figure 3, showing gas flowing through the valve arrangement,
Figure 6 is a view corresponding to figure 3, showing gas being prevented from flowing through the valve arrangement,
Figure 7 is a diagrammatic view of part of a first air-bag of a safety device in accordance with a further embodiment of the invention, during an initial stage of manufacture,
Figure 8 is a diagrammatic view of part of a second air-bag of the safety device according to the further embodiment of the invention, during an initial stage of manufacture,
Figure 9 is a diagrammatic view from above of a valve arrangement of the safety device of the further embodiment of the invention, during a later stage of manufacture,
Figure 10 is a view from below of the valve arrangement of figure 9,
Figure 11 is a view corresponding to figure 9, showing stitching during a final stage of manufacture, and
Figure 12 is a view corresponding to figure 10, showing stitching during a final stage of manufacture.

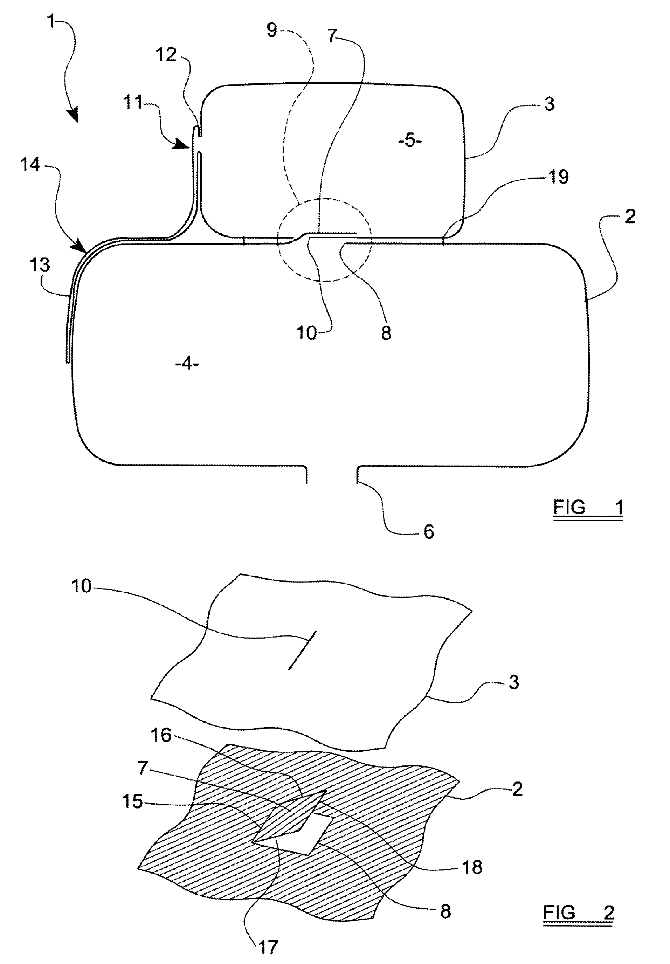

Referring initially, to figure 1, a safety device in accordance with one embodiment of the invention takes the form a two-chamber air-bag 1. The air-bag comprises a first air-bag 2 and a second air-bag 3. The first air-bag 2 defines a first chamber 4 and the second air-bag 3 defines a second chamber 5. The air-bags 2,3 are preferably of fabric, but may instead be of another flexible material, such as plastic or sheet metal.

The air-bag 1 is, in this embodiment, a driver's air-bag which is configured to be packed within a module which is to be installed in the hub of a steering wheel. However, in other embodiments, the air-bag 1 is a passenger air-bag, side air-bag, knee air-bag or an inflatable curtain.

The first air-bag 2 is provided with an inlet aperture 6 which is configured to be connected to a source of gas (not shown). The first air-bag 2 also incorporates a blocking element 7 and an opening 8. The blocking element 7 and the opening 8 constitute parts of a valve arrangement 9 which will be described in detail below.

The second air-bag 3 incorporates a slit 10. The slit 10 is formed in the material of the second air-bag 3. The slit 10 constitutes another part of the valve arrangement 9.

The second air-bag 3 also incorporates a vent arrangement 11. The vent arrangement 11 comprises a vent aperture 12 which is formed in one side of the second air-bag 3. An elongate fabric tube 13 is stitched over the vent aperture 12 to form a vent tube 14. The vent tube 14 is stitched to the air-bag 1 so that the vent tube defines a gas flow path from the vent aperture 12 to a location which is remote from the vent aperture 12. The purpose of the vent arrangement 11 will become clear from the description below.

The construction of the valve arrangement 9 will now be described with reference to figures 2 to 4.

The first and second air-bags 2,3 are provided initially intact, that is to say without the blocking element 7, opening 8 or slit 10. Three sides of a rectangle are cut in a region of the first air-bag 2 to form the rectangular blocking element 7 which is cut partially from the first air-bag 2, as seen in figure 2. The hole in the first air-bag 2 which was originally occupied by the blocking element 7 forms the opening 8 of the first air-bag 2. In this embodiment, the blocking element 7 is rectangular, but in other embodiments the blocking element 7 may be of another suitable shape.

It is to be appreciated that the blocking element 7 is formed from material of the first air-bag 2 at a region where the first air-bag 2 meets the second air-bag 3. The blocking element 7 is integral with the material of the first air-bag 2. The blocking element 7 is not an element which is initially separate to the first air-bag 2 but which is subsequently attached to the first air-bag 2.

The slit 10 is formed in the material of the second air-bag 3. The blocking element 7 is pushed through the slit 10 so that the blocking element 7 extends into the interior of the second air-bag 3. When the blocking element 7 extends through the slit 10, the opening 8 in the first air-bag 2 is in fluid communication with the slit 10 of the second air-bag 3. The blocking element 7 extends across the slit 10 to cover at least part of the slit 10 and overlies and seals against a region of the surface of the second air-bag 3 to substantially prevent gas flowing from the second air-bag 3 through the slit 10 and the opening 8 into the first air-bag 2.

When the blocking element 7 extends through the slit 10, the edge of the blocking element 7 which is closest to the slit 10 defines a first edge 15. The two parallel edges of the blocking element 7 which extend perpendicularly from each end of the first edge 15 define second and third edges 16,17 of the blocking element 7. The remaining edge of the blocking element 7 which connects the ends of the second and third edges 16,17, remote from the first edge 15, defines a fourth edge 18 of the blocking element 7.

The first air-bag 2 is attached to the second air-bag 3 by stitching 19 which surrounds the valve arrangement 9.

In this embodiment, the blocking element 7 is attached to the interior of the second air-bag 3 by stitching. In other embodiments, the blocking element 7 is attached to the interior of the second air-bag by adhesive which can also be used instead of or in addition to stitching. In one embodiment, however, the blocking element 7 is not attached to the interior of the second air-bag 3.

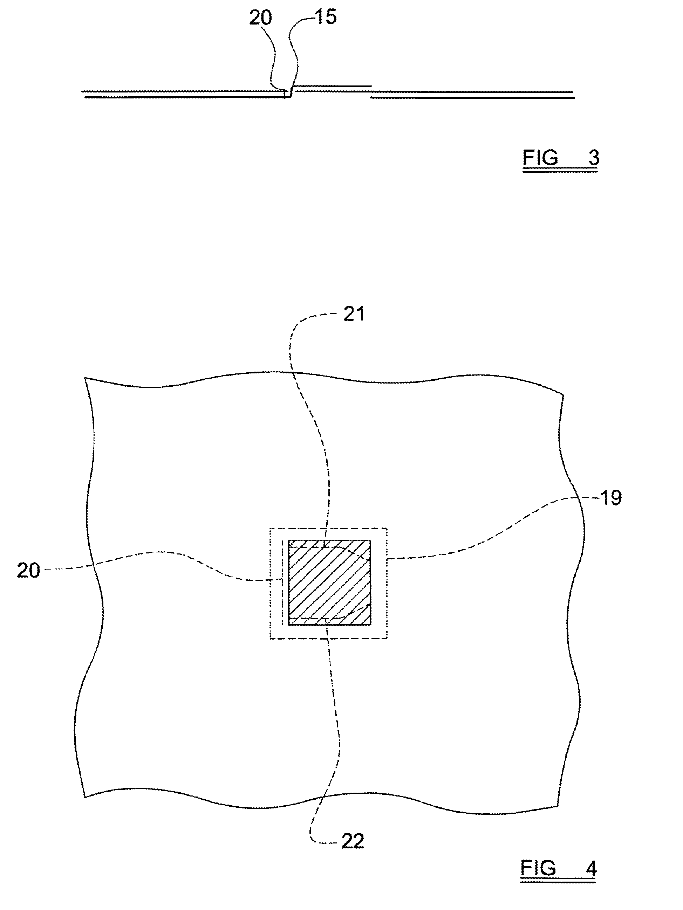

The first air-bag 2 is also attached to the second air-bag 3 by a line of stitching 20 which extends parallel to the first edge 15 of the blocking element 7, as seen in figure 3 and 4. The blocking element 7 is attached to the interior of the second air-bag 3 by lines of stitching 21,22 which each extend along the second and third edges 16,17 of the blocking element 7. The lines of stitching 21,22 are parallel to one another towards the end closest to the first edge 15 of the blocking element 7 but the lines of stitching 21,22 curve towards one another as they approach the fourth edge 18 of the blocking element 7. At least a portion of the fourth edge 18 of the blocking element 7 is not attached to the interior of the second air-bag 3.

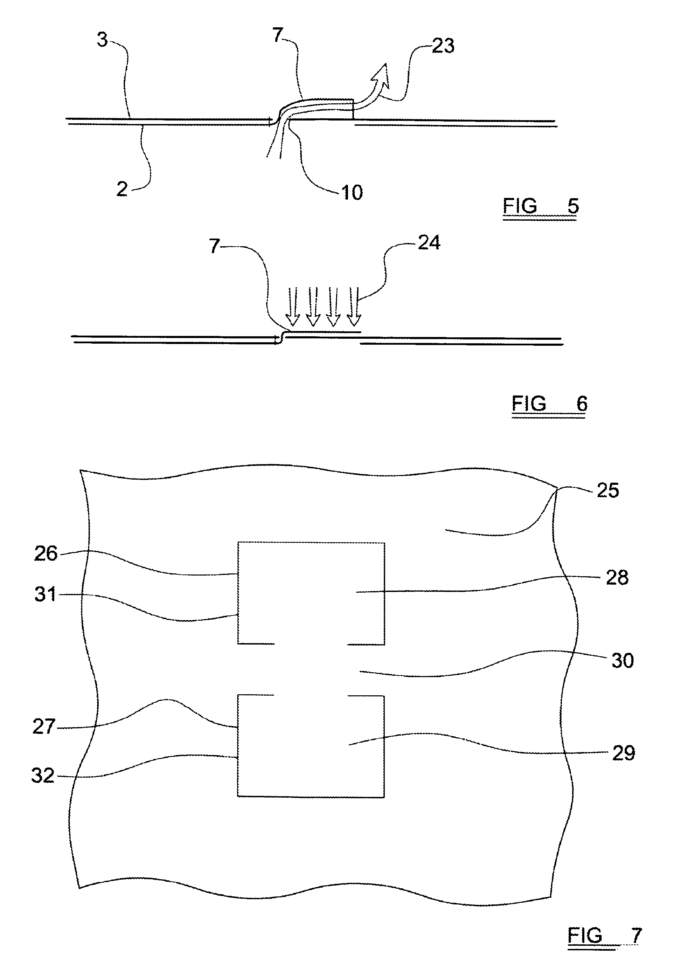

Referring now to figure 5, the air-bag 1 is inflated by a source of gas (not shown) which injects gas into the first air-bag 2 via the inlet aperture 6. When the gas pressure within the first air-bag 2 is greater than the gas pressure within the second air-bag 3 the pressure of gas within the first air-bag 2 exerts a force on the underside of the blocking element 7, through the slit 10. The pressure on the underside of the blocking element 7 causes the blocking element 7 to deform to uncover at least part of the slit 10 and break the seal between the blocking element 7 and the second air-bag 3 to permit gas to flow along a gas flow path 23, from the first air-bag 2, through the opening 8 and the slit 10, and into the second air-bag 3.

The pressure of gas within the second air-bag 3 rises as gas flows into the second air-bag 3. The pressure of gas within the second air-bag 3 is, however, limited as a result of gas flowing out from the second air-bag 3 via the vent arrangement 11. The size of the vent aperture 12 and the size and configuration of the valve arrangement 9 are selected so that the air-bag 3 is inflated to a pressure which is less than the pressure in the first air-bag 2 so that the second air-bag 3 provides a softer cushion than the first air-bag 2.

The air-bag 1 is positioned within a vehicle so that when the air-bag 1 is inflated fully the second air-bag 3 is closest to the head of an occupant of the vehicle. During a crash situation, the head of the occupant contacts the second air-bag 3 before the torso of the occupant contacts the air-bag 1. When the head of the occupant moves against the second air-bag 3, the second air-bag 3 is compressed and the pressure of gas within the second air-bag rises. The pressure of the gas within the second air-bag 3 exerts a force on the upper side of the blocking element 7 as indicated by arrows 24 in figure 6. The force flattens the blocking element 7 against the interior of the second air-bag 3, thereby closing the slit 10 and sealing against a region of the surface of the second air-bag 3 to prevent gas from flowing from the second air-bag 3 through the slit 10 and the opening 8 into the first air-bag 2.

Gas is vented from the second air-bag 3 by the vent arrangement 11 so that the second air-bag deflates to provide a gentle cushion for the head of the occupant. The vent tube 14 of the vent arrangement 11 guides the vented gas to a position remote from the second air-bag 3 and hence remote from the head of an occupant which is moving against the second air-bag 3. The vent tube 14 thus diverts any hot and dangerous gas within the second air-bag 3 away from the head of the occupant.

Referring now to figure 7, a safety device in accordance with a further embodiment of the invention is a two chamber air-bag of the same configuration as the air-bag 1 described above. However, the safety device of this further embodiment incorporates a different valve arrangement. Whilst the valve arrangement 9 described above incorporates one blocking element 7, one opening 8 and one slit 10, the valve arrangement of this further embodiment incorporates two blocking elements, two openings and two slits. The construction of the valve arrangement of this further embodiment will now be described.

The valve arrangement of this further embodiment is effectively two, spaced apart, valve arrangements 9 of the type described above. A first air-bag 25 is provided initially intact, that is to say without any openings or blocking elements. Two generally rectangular shaped cuts 26,27 are made in the material of the first air-bag 25 to define two rectangular, spaced apart, blocking elements 28,29. The blocking elements 28,29 are spaced apart by a spacer region 30 which is defined by the material of the first air-bag 25 between the blocking elements 28,29.

It is to be appreciated that the blocking elements 28,29 are formed from the material of the first air-bag 25. The blocking elements 28,29 remain integral with the material of the first air-bag 25. The blocking elements 28,29 are not formed by elements which are initially separate to the material of the first air-bag 25 but subsequently attached to the first air-bag 25.

The regions of the first air-bag 25 occupied by the blocking elements 28,29 before the cuts 26,27 were made define two openings 31,32 which are revealed when the blocking elements 28,29 are flexed away from the surrounding material of the first air-bag 25.

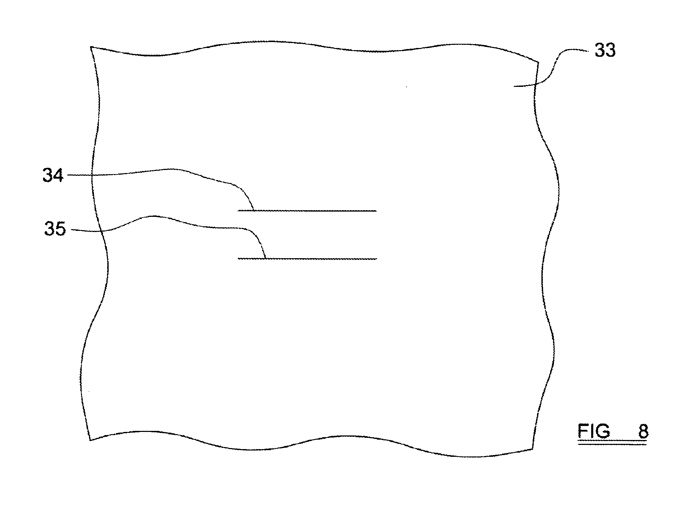

Referring now to figure 8, the safety device of this further embodiment incorporates a second air-bag 33. The second air-bag 33 is identical to the second air-bag 3 of the embodiment described above, but the second air-bag 33 of this further embodiment incorporates two slits 34,35. The slits 34,35 are straight elongate slits which are parallel and spaced apart from one another. The length of each slit 34,35 is equivalent to the width of each of the two blocking elements 28,29. The spacing between the two slits 34,35 is equal to the width of the spacer region 30 between the blocking elements 28,29.

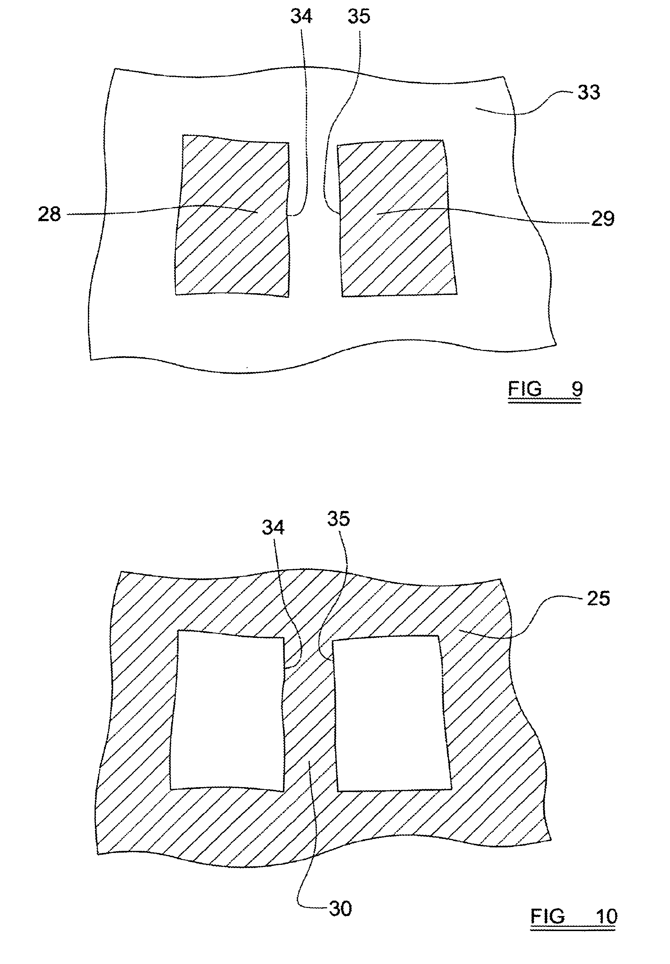

The safety device of this further embodiment is assembled by attaching the first air-bag 25 to the second air-bag 33 as described above. Each of the blocking elements 28 is pushed through a respective one of the slits 34,35, as shown in figures 9 and 10.

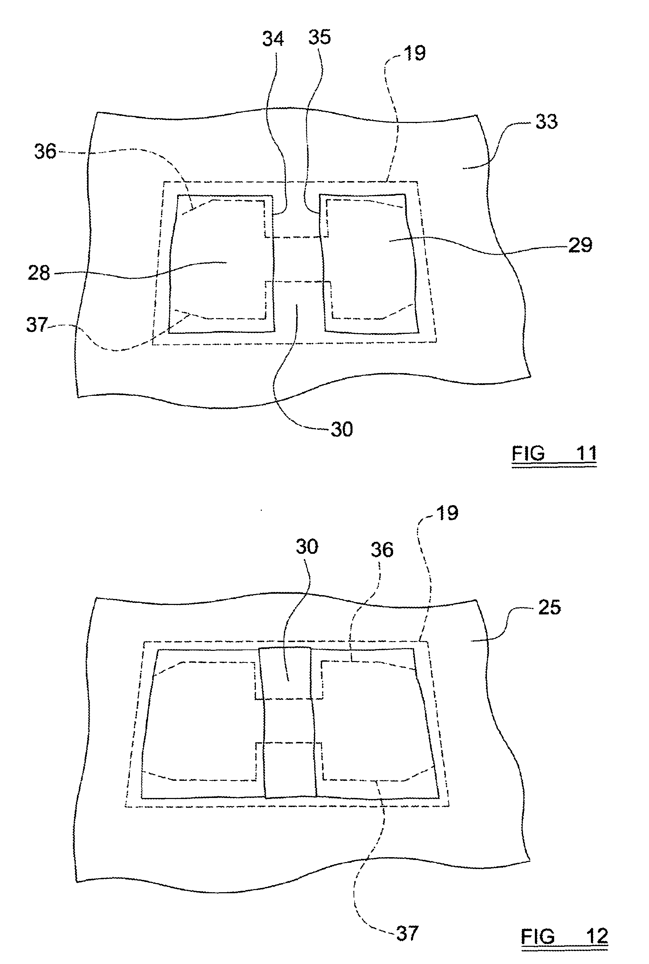

The first and second blocking elements 28,29 are attached to the interior of the second air-bag 33 by lines of stitching 36,37 as shown in figures 11 and 12. A first line of stitching 36 extends along the upper edge of each blocking element 28,29 and across the spacer region 30. The lower line of stitching 37 extends along the lower edge of each of the blocking elements 28,29 and across the spacer region 30.

The valve arrangement of this further embodiment is configured to operate in the same manner as the valve arrangement 9 of the embodiment described above. In this further embodiment, however, each blocking element 28,29 and the slit 34,35 through which it is inserted operates as a one way valve to allow gas to flow from within the first air-bag 25, through the openings 31,32 to the second air-bag 33. The blocking elements 28,29 are also configured to overlie and cover at least part of the slits 34,35 to seal against a region of the second air-bag 33 to substantially prevent gas from flowing from the second air-bag 33 through the slits 34,35 and the openings 31,32 into the first air-bag 25.

Whilst the embodiments described above have one or two blocking elements, it is to be appreciated that in other embodiments of the invention there can be a greater number of blocking elements and a corresponding greater number of inlet openings.

When used in this specification and claims, the terms "comprises" and "comprising" and variations thereof mean that the specified features, steps or integers are included. The terms are not to be interpreted to exclude the presence of other features, steps or components.

## Claims

1. A safety device for use in a vehicle, the safety device comprising:
a first air-bag (40) and a second air-bag (43) which are connected to one another, the second air-bag (43) being provided with a slit (41,42) and the first air-bag (40) being provided with an opening (44), the safety device further comprising a blocking element (47,48) which covers at least part of the slit (41,42) and overlies and seals against a region of a surface of the second air-bag (43) to substantially prevent gas flowing from the second air-bag (43) through the slit (41,42) and the opening (44) into the first air-bag (40), the blocking element (47,48) being configured to deform in response to a pressure of gas within the first air-bag (40) to uncover at least part of the slit (41,42) and break the seal between the blocking element (47,48) and the second air-bag (43) to allow gas to flow from the first air-bag (40) through the slit (41,42) and the opening (44) into the second air-bag (43), **characterised in that** the blocking element (28,29) is formed by a region of the first air-bag (25) which is cut partially from the first air-bag (25).

2. A safety device according to claim 1, wherein the second air-bag (40) is provided with a further slit (41,42) and the safety device comprises a further blocking element (47,48) which is formed by a region of the first air-bag (25) which is cut partially from the first air-bag (25), wherein the further blocking element (47, 48) covers at least part of the further slit (41,42) and overlies and seals against a region of a surface of the second air-bag (43) to substantially prevent gas flowing from the second air-bag (43) through the further slit (41,42) and the opening (44) into the first air-bag (40), the further blocking element (47,48) being configured to deform in response to a pressure of gas within the first air-bag (40) to uncover at least part of the further slit (41,42) and break the seal between the further slit (47,48) and the second air-bag (43) to allow gas to flow from the first air-bag (40) through the further slit (41,42) and the opening (44) into the second air-bag (43).

3. A safety device according to claim 2, wherein the slit (34,35) is substantially parallel to and spaced apart from the further slit (34,35).

4. A safety device according to any one of the preceding claims , wherein the opening (31,32) is defined by a region of the first air-bag (25) which was occupied by one of the or each blocking elements (28,29) before the blocking element (28,29) was cut partially from the first air-bag (25).

5. A safety device according to any one of the preceding claims, wherein the second air-bag (43) is provided with a vent arrangement (11) to vent gas from within the second air-bag (43) to the exterior of the safety device.

6. A safety device according to claim 5, wherein the vent arrangement (11) comprises a vent aperture (12) in the second air-bag (43) and a vent tube (14), the vent tube (14) being connected to the second air-bag (43) to be in fluid communication with the vent aperture (12) so that the vent tube (14) directs gas flowing out from the vent aperture (12) to a location which is remote from the vent aperture (12).

7. A method of manufacturing a safety device for use in a vehicle comprising:
cutting partially a region of a first air-bag (25) to form a blocking element (28,29), the region of the first air-bag (25) which was occupied by the blocking element (28,29) forming an opening (31,32) in the first air-bag (25);
forming a slit (41,42) in a second air-bag (43);
connecting the first air-bag (40) to the second air-bag (43); and
positioning the blocking element (47,48) so that the blocking element (47,48) covers at least part of the slit (41,42) and overlies and seals against a region of a surface of the second air-bag (43) to substantially prevent gas flowing from the second air-bag (43) through the slit (41,42) and the opening (44) into the first air-bag (40), the blocking element (47,48) being configured to deform in response to a pressure of gas within the first air-bag (40) to uncover at least part of the slit (41,42) and break the seal between the blocking element and the second air-bag (43) to allow gas to flow from the first air-bag (40) through the slit (41,42) and the opening (44) into the second air-bag (43).

8. A method according to claim 7, wherein the method further comprises:
forming a further slit (41,42) in the second air-bag (43).

9. A method according to claim 8, wherein the method further comprises:
cutting partially a region of the first air-bag (25) to form a further blocking element (47,48); and
positioning the further blocking element (47, 48) so that the further blocking element (47,48) covers at least part of the further slit (41,42) and overlies and seals against a region of the surface of the second air-bag (43) to substantially prevent gas flowing from the second air-bag (43) through the further slit (41,42) and the opening (44) into the first air-bag (40), the further blocking element (47,48) being configured to deform in response to a pressure of gas within the first air-bag (40) to uncover at least part of the further slit (41,42) and break the seal between the further blocking element (47,48) and the second air-bag (43) to allow gas to flow from the first air-bag (40) through the further slit (41,42) and the opening (44) into the second air-bag (43).

10. A method according to any one of claims 7 to 9, wherein the method further comprises:
forming a vent aperture (12) in the second air-bag (43) and
attaching a vent tube (14) to the second air-bag (43) to be in fluid communication with the vent aperture (12) so that the vent tube (14) directs gas flowing out from the vent aperture (12) to a location which is remote from the vent aperture (12).

## Patentansprüche

1. Sicherheitsvorrichtung zur Verwendung in einem Fahrzeug, wobei die Sicherheitsvorrichtung Folgendes umfasst:
einen ersten Airbag (40) und einen zweiten Airbag (43), die miteinander verbunden sind, wobei der zweite Airbag (43) mit einem Schlitz (41, 42) versehen ist und der erste Airbag (40) mit einer Öffnung (44) versehen ist, wobei die Sicherheitsvorrichtung weiterhin ein Blockierungselement (47, 48) umfasst, das zumindest einen Teil des Schlitzes (41, 42) abdeckt und einen Bereich einer Oberfläche des zweiten Airbags (43) überlagert und abdichtet, um im Wesentlichen zu verhindern, dass Gas aus dem zweiten Airbag (43) durch den Schlitz (41, 42) und die Öffnung (44) in den ersten Airbag (40) strömt, wobei das Blockierungselement (47, 48) dazu konfiguriert ist, sich in Ansprechung auf einen Gasdruck im ersten Airbag (40) zu verformen, um zumindest einen Teil des Schlitzes (41, 42) aufzudecken und die Abdichtung zwischen dem Blockierungselement (47, 48) und dem zweiten Airbag (43) zu durchbrechen, um zu gestatten, dass Gas aus dem ersten Airbag (40) durch den Schlitz (41, 42) und die Öffnung (44) in den zweiten Airbag (43) strömt, **dadurch gekennzeichnet, dass** das Blockierungselement (28, 29) von einem Bereich des ersten Airbags (25) gebildet wird, der teilweise aus dem ersten Airbag (25) geschnitten ist.

2. Sicherheitsvorrichtung nach Anspruch 1, wobei der zweite Airbag (40) mit einem weiteren Schlitz (41, 42) versehen ist und die Sicherheitsvorrichtung ein weiteres Blockierungselement (47, 48) umfasst, das von einem Bereich des ersten Airbags (25) gebildet wird, der teilweise aus dem ersten Airbag (25) geschnitten ist, wobei das weitere Blockierungselement (47, 48) zumindest einen Teil des weiteren Schlitzes (41, 42) abdeckt und einen Bereich einer Oberfläche des zweiten Airbags (43) überlagert und abdichtet, um im Wesentlichen zu verhindern, dass Gas aus dem zweiten Airbag (43) durch den weiteren Schlitz (41, 42) und die Öffnung (44) in den ersten Airbag (40) strömt, wobei das weitere Blockierungselement (47, 48) dazu konfiguriert ist, sich in Ansprechung auf einen Gasdruck im ersten Airbag (40) zu verformen, um zumindest einen Teil des weiteren Schlitzes (41, 42) aufzudecken und die Abdichtung zwischen dem weiteren Schlitz (47, 48) und dem zweiten Airbag (43) zu durchbrechen, um zu gestatten, dass Gas aus dem ersten Airbag (40) durch den weiteren Schlitz (41, 42) und die Öffnung (44) in den zweiten Airbag (43) strömt.

3. Sicherheitsvorrichtung nach Anspruch 2, wobei der Schlitz (34, 35) im Wesentlichen parallel zu und von dem weiteren Schlitz (34, 35) beabstandet ist.

4. Sicherheitsvorrichtung nach irgendeinem der vorhergehenden Ansprüche, wobei die Öffnung (31, 32) durch einen Bereich des ersten Airbags (25) definiert ist, der von einem oder jedem der Blockierungselemente (28, 29) besetzt war, bevor das Blockierungselement (28, 29) teilweise aus dem ersten Airbag (25) geschnitten wurde.

5. Sicherheitsvorrichtung nach irgendeinem der vorhergehenden Ansprüche, wobei der zweite Airbag (43) mit einer Belüftungsanordnung (11) versehen ist, um Gas vom Inneren des zweiten Airbags (43) nach außerhalb der Sicherheitsvorrichtung abziehen zu lassen.

6. Sicherheitsvorrichtung nach Anspruch 5, wobei die Belüftungsanordnung (11) eine Belüftungsöffnung (12) im zweiten Airbag (43) und einen Belüftungsschlauch (14) umfasst, wobei der Belüftungsschlauch (14) mit dem zweiten Airbag (43) verbunden ist, um mit der Belüftungsöffnung (12) in Fluidverbindung zu sein, so dass der Belüftungsschlauch (14) Gas, das aus der Belüftungsöffnung (12) strömt, zu einer Stelle leitet, die von der Belüftungsöffnung (12) entfernt ist.

7. Verfahren zur Herstellung einer Sicherheitsvorrichtung zur Verwendung in einem Fahrzeug, umfassend:
teilweises Schneiden eines Bereichs eines ersten Airbags (25) zur Bildung eines Blockierungselements (28, 29), wobei der Bereich des ersten Airbags (25), der vom Blockierungselement (28, 29) besetzt war, eine Öffnung (31, 32) im ersten Airbag (25) bildet;
Ausbilden einen Schlitzes (41, 42) in einem zweiten Airbag (43);
Verbinden des ersten Airbags (40) mit dem zweiten Airbag (43); und
Positionieren des Blockierungselements (47, 48) so, dass das Blockierungselement (47, 48) zumindest einen Teil des Schlitzes (41, 42) abdeckt und einen Bereich einer Oberfläche des zweiten Airbags (43) überlagert und abdichtet, um im Wesentlichen zu verhindern, dass Gas aus dem zweiten Airbag (43) durch den Schlitz (41, 42) und die Öffnung (44) in den ersten Airbag (40) strömt, wobei das Blockierungselement (47, 48) dazu konfiguriert ist, sich in Ansprechung auf einen Gasdruck im ersten Airbag (40) zu verformen, um zumindest einen Teil des Schlitzes (41, 42) aufzudecken und die Abdichtung zwischen dem Blockierungselement (47, 48) und dem zweiten Airbag (43) zu durchbrechen, um zu gestatten, dass Gas aus dem ersten Airbag (40) durch den Schlitz (41, 42) und die Öffnung (44) in den zweiten Airbag (43) strömt.

8. Verfahren nach Anspruch 7, wobei das Verfahren weiterhin umfasst:
Ausbilden eines weiteren Schlitzes (41, 42) im zweiten Airbag (43).

9. Verfahren nach Anspruch 8, wobei das Verfahren weiterhin umfasst:
teilweises Schneiden eines Bereichs des ersten Airbags (25), um ein weiteres Blockierungselement (47, 48) auszubilden; und
Positionieren des weiteren Blockierungselements (47, 48), so dass das weitere Blockierungselement (47, 48) zumindest einen Teil des weiteren Schlitzes (41, 42) abdeckt und einen Bereich der Oberfläche des zweiten Airbags (43) überlagert und abdichtet, um im Wesentlichen zu verhindern, dass Gas aus dem zweiten Airbag (43) durch den weiteren Schlitz (41, 42) und die Öffnung (44) in den ersten Airbag (40) strömt, wobei das weitere Blockierungselement (47, 48) dazu konfiguriert ist, sich in Ansprechung auf einen Gasdruck im ersten Airbag zu verformen, um zumindest einen Teil des weiteren Schlitzes (41, 42) aufzudecken und die Abdichtung zwischen dem weiteren Blockierungselement (47, 48) und dem zweiten Airbag (43) zu durchbrechen, um zu gestatten, dass Gas aus dem ersten Airbag (40) durch den weiteren Schlitz (41, 42) und die Öffnung (44) in den zweiten Airbag (43) strömt.

10. Verfahren nach irgendeinem der Ansprüche 7 bis 9, wobei das Verfahren weiterhin umfasst:
Ausbilden einer Belüftungsöffnung (12) im zweiten Airbag (43) und
Anbringen eines Belüftungsschlauchs (14) an dem zweiten Airbag (43), um mit der Belüftungsöffnung (12) in Fluidverbindung zu sein, so dass der Belüftungsschlauch (14) Gas, das aus der Belüftungsöffnung (12) strömt, zu einer Stelle leitet, die von der Belüftungsöffnung (12) entfernt ist.

## Revendications

1. Un dispositif de sécurité destiné à être utilisé dans un véhicule et se composant de ce qui suit :
un premier coussin gonflable (40) et un deuxième coussin gonflable (43) connectés ensemble, le deuxième coussin gonflable (43) étant muni d'une fente (41, 42) et le premier coussin gonflable (40) étant pourvu d'une ouverture (44), le dispositif de sécurité comportant également un élément de blocage (47, 48) qui recouvre au moins une partie de la fente (41, 42) et recouvre et protège contre une partie d'une surface du deuxième coussin gonflable (43) afin d'empêcher sensiblement le gaz de passer du deuxième coussin gonflable (43) au premier coussin gonflable (40) par la fente (41, 42) et l'ouverture (44),
l'élément de blocage (47, 48) étant configuré pour se déformer sous l'effet de la pression du gaz se trouvant à l'intérieur du premier coussin gonflable (40) afin de découvrir au moins une partie de la fente (41, 42) et rompre le joint entre l'élément de blocage (47, 48) et le deuxième coussin gonflable (43) pour permettre au gaz de s'écouler du premier coussin gonflable (40) au deuxième coussin gonflable (43) par la fente (41, 42) et l'ouverture (44), **se caractérisant par le fait que** l'élément de blocage (28, 29) est formé par une partie du premier coussin gonflable (25) partiellement découpée dans le premier coussin gonflable (25).

2. Un dispositif de sécurité selon la revendication 1, dans lequel le deuxième coussin gonflable (40) est muni d'une autre fente (41, 42) et le dispositif de sécurité comporte un autre élément de blocage (47, 48) formé par une partie du premier coussin gonflable (25) partiellement découpée dans le premier coussin gonflable (25), dans lequel l'autre élément de blocage (47, 48) recouvre au moins une partie de l'autre fente (41, 42) et recouvre et protège contre une partie d'une surface du deuxième coussin gonflable (43) afin d'empêcher sensiblement le gaz de passer du deuxième coussin gonflable (43) au premier coussin gonflable (40) par l'autre fente (41, 42) et l'ouverture (44), l'autre élément de blocage (47, 48) étant configuré pour se déformer sous l'effet de la pression du gaz se trouvant à l'intérieur du premier coussin gonflable (40) afin de découvrir au moins une partie de l'autre fente (41, 42) et rompre le joint ente l'autre fente (47, 48) et le deuxième coussin gonflable (43) pour permettre au gaz de s'écouler du premier coussin gonflable (40) au deuxième coussin gonflable (43) par l'autre fente (41, 42) et l'ouverture (44).

3. Un dispositif de sécurité selon la revendication 2, dans lequel la fente (34, 35) est sensiblement parallèle à l'autre fente (34, 35), dont elle est espacée.

4. Un dispositif de sécurité selon n'importe laquelle des revendications précédentes, dans lequel l'ouverture (31, 32) est créée par une partie du premier coussin gonflable (25) qui était occupée par un des éléments de blocage ou les deux (28, 29) avant que l'élément de blocage (28, 29) ne soit en partie découpé dans le premier coussin gonflable (25).

5. Un dispositif de sécurité selon n'importe laquelle des revendications précédentes, dans lequel le deuxième coussin gonflable (43) est muni d'un système d'aération (11) permettant d'évacuer le gaz présent à l'intérieur du deuxième coussin gonflable (43) à l'extérieur du dispositif de sécurité.

6. Un dispositif de sécurité selon la revendication 5, dans lequel le système d'aération (11) se compose d'une ouverture d'aération (12) présente dans le deuxième coussin gonflable (43) et d'un tube d'aération (14), le tube d'aération (14) étant connecté au deuxième coussin gonflable (43) de façon à être en communication fluidique avec l'ouverture d'aération (12) pour que le tube d'aération (14) achemine le gaz sortant de l'ouverture d'aération (12) jusqu'à un endroit éloigné de l'ouverture d'aération (12).

7. Un procédé de fabrication d'un dispositif de sécurité destiné à être utilisé dans un véhicule et consistant à :
découper partiellement une partie d'un premier coussin gonflable (25) afin d'obtenir un élément de blocage (28, 29), la partie du premier coussin gonflable (25) qui était occupée par l'élément de blocage (28, 29) créant une ouverture (31, 32) dans le premier coussin gonflable (25) ;
créer une fente (41, 42) dans un deuxième coussin gonflable (43) ;
connecter le premier coussin gonflable (40) au deuxième coussin gonflable (43) ; et placer l'élément de blocage (47, 48) de manière à ce que l'élément de blocage (47, 48) recouvre au moins une partie de la fente (41, 42) et recouvre et protège contre une partie d'une surface du deuxième coussin gonflable (43) afin d'empêcher sensiblement le gaz de passer du deuxième coussin gonflable (43) au premier coussin gonflable (40) par la fente (41, 42) et l'ouverture (44), l'élément de blocage (47, 48) étant configuré pour se déformer sous l'effet de la pression du gaz présent dans le premier coussin gonflable (40) afin de découvrir au moins une partie de la fente (41, 42) et de rompre le joint entre l'élément de blocage et le deuxième coussin gonflable (43) afin de permettre au gaz de s'écouler du premier coussin gonflable (40) au deuxième coussin gonflable (43) par la fente (41, 42) et l'ouverture (44).

8. Un procédé selon la revendication 7, supposant également de créer une autre fente (41, 42) dans le deuxième coussin gonflable (43).

9. Un procédé selon la revendication 8, se composant également des opérations suivantes :
découper partiellement une partie du premier coussin gonflable (25) afin d'obtenir un autre élément de blocage (47, 48) ; et
placer l'autre élément de blocage (47, 48) de manière telle que l'autre élément de blocage (47, 48) recouvre au moins une partie de l'autre fente (41, 42) et recouvre et protège contre une partie de la surface du deuxième coussin gonflable (43) afin d'empêcher sensiblement le gaz de s'écouler du deuxième coussin gonflable (43) au premier coussin gonflable (40) par l'autre fente (41, 42) et l'ouverture (44), l'autre élément de blocage (47, 48) étant configuré pour se déformer sous l'effet de la pression du gaz présent dans le premier coussin gonflable (40) afin de découvrir au moins une partie de l'autre fente (41, 42) et de rompre le joint entre l'autre élément de blocage (47, 48) et le deuxième coussin gonflable (43) pour permettre au gaz de s'écouler du premier coussin gonflable (40) au deuxième coussin gonflable (43) par l'autre fente (41, 42) et l'ouverture (44).

10. Un procédé selon n'importe laquelle des revendications 7 à 9, supposant également les opérations suivantes :
créer une ouverture d'aération (12) dans le deuxième coussin gonflable (43) ; et
fixer un tube d'aération (14) sur le deuxième coussin gonflable (43) pour assurer la communication fluidique avec l'ouverture d'aération (12) afin que le tube d'aération (14) achemine le gaz sortant de l'ouverture d'aération (12) jusqu'à un endroit éloigné de l'ouverture d'aération (12).
